# EUROPÄISCHE PATENTSCHRIFT

(11) **EP 2 087 065 B1**
(45) Veröffentlichungstag und Bekanntmachung des Hinweises auf die Patenterteilung: **10.07.2013**
(21) Anmeldenummer: 07821630.6
(22) Anmeldetag: 22.10.2007
(51) Int. Cl.: C09K 11/66, C09K 11/73, C09K 11/77, H01J 61/44, H01J 61/20

(54) **LEUCHTSTOFFBESCHICHTUNG FÜR HOCH BELASTETE LAMPEN MIT FARBTEMPERATUREN KLEINER ALS 2700 KELVIN**
FLUORESCENT COATING FOR HIGH OUTPUT LAMPS WITH COLOR TEMPERATURES OF LESS THAN 2700 KELVIN
REVÊTEMENT DE MATÉRIAU PHOSPHORESCENT POUR DES LAMPES SOUMISES À DES CONTRAINTES ÉLEVÉES PRÉSENTANT DES TEMPÉRATURES DE COULEUR INFÉRIEURES À 2700 KELVIN

(30) Priorität: 06.11.2006 DE 102006052221
(43) Veröffentlichungstag der Anmeldung: 12.08.2009
(73) Patentinhaber: OSRAM GmbH, 80807 München (DE)
(72) Erfinder: CASTIGLIONI, Claudia, 86444 Mühlhausen / Affing (DE); GRUBER, Wolfgang, 86169 Augsburg (DE); KONRAD, Armin, 86845 Grossaitingen (DE)
(86) Internationale Anmeldenummer: PCT/EP2007/061266
(87) Internationale Veröffentlichungsnummer: WO 2008/055770

(56) Entgegenhaltungen:
- EP-A- 0 896 361
- WO-A-02/103748
- JP-A- 2005 120 251
- DATABASE WPI Derwent Publications Ltd., London, GB; AN 1977-80180Y XP002470254 AKIYAMA N.: "Fluorescent lamp with high colour rendering property" & JP 52 115584 A (TOKYO SHIBAURA ELECTRIC) 28. September 1977 (1977-09-28)

## Beschreibung

### Technisches Gebiet

Vorliegende Erfindung betrifft eine Leuchtstoffbeschichtung für eine Hg-Niederdruckentladungslampe (die Abkürzung Hg steht für Quecksilber oder Quecksilberdampf) mit einer Leuchtstoffzusammensetzung, die zumindest aus einem im grünen Spektralbereich emittierenden Grünstoff und einem im roten Spektralbereich emittierenden Rotleuchtstoff beschichtet ist.

### Stand der Technik

Für die Beschichtung von Hg-Niederdruckentladungslampen werden in der Regel ein roter, blauer und grüner Leuchtstoff zur Strahlungskonversion verwendet, um im Bereich der Juddschen Geraden Farbtemperaturen > 2500 Kelvin zu realisieren. Die üblicherweise eingesetzten Leuchtstoffe (Bariummagnesiumaluminat dotiert mit Europium BaM-gAl₁₀O₁₇:Eu im Folgenden als BAM bezeichnet, Cermagnesiumaluminat dotiert mit Terbium CeMgAl₁₁O₁₉:Tb im Folgenden als CAT bezeichnet, Yttriumoxid dotiert mit Europium Y₂O₃:Eu im Folgenden als YOE oder L581 bezeichnet) konvertieren die durch die Hg-Niederdruckentladung erzeugten Strahlungen bei 185 nm und 254 nm in sichtbares Licht.

Der durch die Hg-Entladung im Sichtbaren emittierte Strahlungsteil beispielsweise bei 435 nm wird jedoch durch den Blauleuchtstoff BAM nicht oder nur geringfügig absorbiert. Demnach ist dem durch die Leuchtstoffe BAM, Gemäß EP 0 896 361 A werden Leuchtstofflampen vorgestellt, die bei Einsatz von Leuchtstoffen mit Emission im roten, gelb-grünen und blauen Spektralbereich Farbtemperaturen von größer 3500 K erzielen.

Die in der JP 52 115584 A beschriebene Leuchtstoffbeschichtung weist ebenfalls Leuchstoffe auf, die im roten, blauen und grünen Spektralbereich emittieren.

Die WO 02/103748 A betrifft Niederdruckentladungslampen mit einer quecksilberfreien Gasfüllung, die eine Indium-Verbindung und ein Puffergas enthält. Diese Gaszusammensetzung emittiert beim Gasentladungsvorgang im sichtbaren Spektralbereich mit einem weiten kontinuierlichen Spektrum im blauen Wellenlängenbereich. Weißes Licht wird hier durch Verwendung von Leuchtstoffen mit Emission in Komplementärfarben erzeugt.

Der durch die Hg-Entladung im Sichtbaren emittierte Strahlungsteil beispielsweise bei 435 nm wird jedoch durch den Blauleuchtstoff BAM nicht oder nur geringfügig absorbiert. Demnach ist dem durch die Leuchtstoffe BAM, CAT und YOE bereitgestellten Leuchtstoffspektrum ein zusätzliches bläuliches Hg-Vis-Spektrum überlagert.

Aufgrund der Überlagerung mit dem Hg-Vis-Spektrum ist das durch die im UV-Bereich angeregten Leuchtstoffe aufgespanntes Farbdreieck verkleinert und die Eckpunkte sind in Richtung des Hg-Vis-Spektrums verschoben. Dadurch können nicht mehr alle Farborte des gewöhnlicherweise durch die Leuchtstoffe aufgespannten Farbdreiecke erreicht werden. Die Stärke der Verschiebung hängt dabei von dem relativen Anteil der Hg-Vis-Strahlung zur Leuchtstoffstrahlung ab, wobei der Hg-Vis-Strahlungsanteil mit zunehmenden Ladungsstrom und zunehmender Stromdichte im Entladungsgefäß zunimmt.

Hochbelastete Lampen weisen deshalb einen hohen Hg-Vis-Strahlungsanteil auf, weswegen Farbtemperaturen von 2700 Kelvin allein durch die Mischung eines Grün- bzw. Rotleuchtstoffs nicht mehr erreicht werden können. Mit anderen Worten, das Farborttoleranzfeld liegt außerhalb des erreichbaren Farbdreiecks. Zusätzlich erschwert die fortschreitende Miniaturisierung der Entladungsgefäße einerseits und die zunehmende Strahlungsleistung für High-Output-Lampen andererseits die Realisierung von normgemäßen Hg-Niederdruck-Entladungslampen mit niederen Farbtemperaturen.

Um trotzdem Farbtemperaturen < 2700 Kelvin erreichen zu können, wurde im Stand der Technik vorgeschlagen, zur Reduzierung oder Vermeidung des bläulichen Hg-Vis-Anteils Filterfolien einzusetzen, die über das Entladungsgefäß gestülpt werden.

Nachteilig an diesen Filterfolien ist jedoch, dass sie einerseits teuer und andererseits nicht alterungsstabil sind oder aber beispielsweise für Kompaktleuchtstofflampen aufgrund der Geometrie des Entladungsgefäßes nur mit unverhältnismäßig hohem Aufwand anwendbar sind.

Des weiteren wurde im Stand der Technik vorgeschlagen, zwischen Entladungsgefäß und Leuchtstoffschicht eine die bläuliche Strahlung absorbierende Pigmentbeschichtung, beispielsweise mit Fe₂O₃-Pulver bereitzustellen. Aufgrund der zusätzlichen Beschichtung sinkt jedoch die Lichtausbeute der Lampe, weswegen für eine ausreichende Helligkeit unverhältnismäßig mehr Leistung zur Verfügung zu stellen ist. Dies bedeutet einen energetisch hohen Aufwand, der wiederum im Gegensatz zu den üblichen Stromsparmaßnahmen steht.

### Darstellung der Erfindung

Aufgabe vorliegender Erfindung ist es deshalb, eine Möglichkeit bereitzustellen, auch bei hochbelasteten Lampen niedrige Farbtemperaturen zu erreichen.

Diese Aufgabe wird dadurch gelöst, dass die Leuchtstoffbeschichtung für Hg-Niederdruck-Entladungslampen aus einem im grünen Spektralbereich emittierenden Grünleuchtstoff und einem im roten Spektralbereich emittierenden Rotleuchtstoff besteht, der Y₃Al₅O₁₂:Ce als ein weiterer Leuchtstoff zugegeben wird, der dazu ausgelegt ist, UV-Hg- und Hg-Vis-Strahlung zu absorbieren. Dabei ist dieser Leuchtstoff ein im gelben Spektralbereich emittierender Gelbleuchtstoff.

Vorteilhafterweise absorbiert dieser Gelbleuchtstoff nicht nur die ultraviolette Hg-Strahlung, sondern auch in hohem Maße die bläuliche Hg-Vis-Strahlung und konvertiert beide Hg-Strahlungsanteile in sichtbare Strahlung, wobei seine dominierende Wellenlänge bei > 520 nm liegt.

Dabei ist es besonders vorteilhaft, wenn dieser Gelbleuchtstoff derart ausgelegt ist, dass ein Farbort von x = 0,463 und y = 0,420 einstellbar ist.

Dies kann beispielsweise dadurch erreicht werden, wie ein weiteres bevorzugtes Ausführungsbeispiel zeigt, dass der Gelbleuchtstoff mit einer Konzentration von bis zu 20 Gewichtsprozent, insbesondere bis zu 10 Gewichtsprozent, bezüglich des Grünleuchtstoffs eingestellt wird.

Besonders vorteilhaft ist, wenn als Grünleuchtstoff CAT (CeMgAl₁₁O₁₉:Tb), Lanthanphosphat dotiert mit Cer und Terbium (als LAP bezeichnet) oder CerGadoliniumMagnesiumPentaborat dotiert mit Terbium (als (Ce,Gd,Tb)MgB₅O₁₀ oder CBT bezeichnet) und/oder als Rotleuchtstoff Yttriumoxid dotiert mit Europium (als Y₂O₃ oder YOE bezeichnet) oder GermaniumZinkMagnesiumPentaborat dotiert mit Cer und Mangan (als GeZnMgB₅O₁₀:Ce, Mn oder L165 bezeichnet) zur Verwendung kommen.

Weitere Vorteile und bevorzugte Ausführungsbeispiele werden in den unteransprüchen, den Zeichnungen sowie der zugehörigen Beschreibung definiert.

### Kurze Beschreibung der Zeichnung

Im Folgenden soll die Erfindung anhand eines Ausführungsbeispiels näher erläutert werden. Das in der Figur dargestellte Ausführungsbeispiel ist rein exemplarischer Natur und soll nicht dazu verwendet werden, die Erfindung darauf einzuschränken.

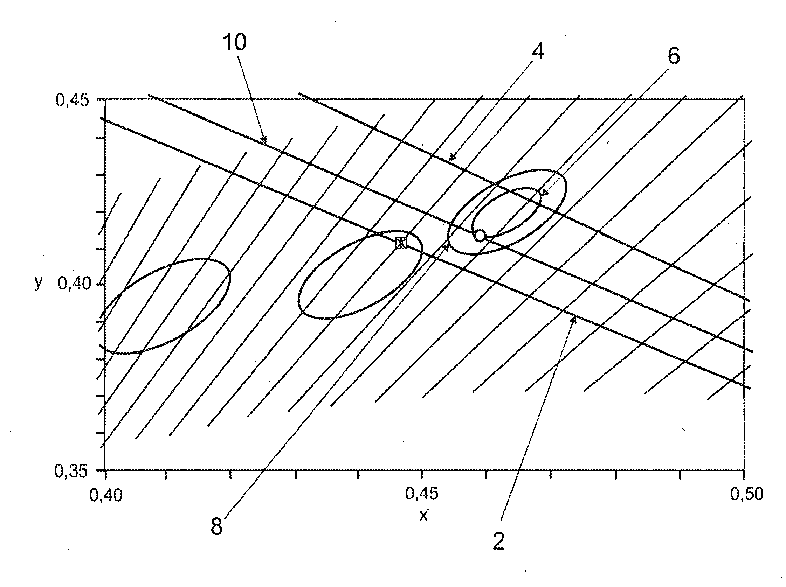

Die Figur zeigt
- Fig. 1: eine graphische Darstellung dereinstellbaren Farborte mit einer aus dem Stand der Technik bekannten Leuchtstoffbeschichtung aus einem Grünleuchtstoff und einem Rotleuchtstoff, die bei einer hochbelasteten Lampe bzw. einer niedrig belasteten Lampe zum Einsatz kommen und einem besonders bevorzugten Ausführungsbeispiel der erfindungsgemäßen Leuchtstoffmischung.

### Bevorzugte Ausführung der Erfindung

Auf der in der Figur mit 2 gekennzeichneten Geraden kommen all die einstellbaren Farborte zu liegen, die mit einer aus dem Stand der Technik bekannten Leuchtstoffmischung aus Y₂O₃:Eu als rotem bzw. CAT:Ce, Tb als grünem Leuchtstoff bestehenden Beschichtung einstellbar sind. Dabei ist die Lampe eine normale und damit eher hochbelastete Hg-Niederdruckentladungslampe.

Die Gerade 4 dagegen stellt die möglichen Farborte einer aus dem Stand der Technik bekannten Leuchtstoffmischung mit Y₂O₃:Eu als rotem und CAT:Ce, Tb als grünem Leuchtstoff bestehenden Leuchtstoffbeschichtung dar. Dabei kommt jedoch eine niedrig belastete Hg-Niederdruck-Entladungslampe, insbesondere eine stabförmige Leuchtstofflampe mit einer Nennleistung von 36 W zum Einsatz.

Die mit 6 und 8 gekennzeichneten Ellipsen stellen die Farborttoleranzfelder mit 3 bzw. 5 Schwellwerteinheiten (3SWE bzw 5SWE) für die Lichtfarbe 2700 Kelvin dar. Dabei ist zu sehen, dass zwar mit der aus dem Stand der Technik bekannten Beschichtung bei niedrigbelasteten Hg-Niederdruck-Entladungslampen die Farbtemperatur von 2700 Kelvin erreicht wird, aber die Beschichtung für normalbelastete Hg-Niederdruck-Entladungslampen (vgl. Gerade 2) nicht erreicht werden kann.

Auf der Geraden 10 kommen die Farborte zum Liegen, die mit der erfindungsgemäßen Leuchtstoffbeschichtung aus Y₂O₃:Eu als rotem; CBT:Ce, Tb als grünem und YAG:Ce als gelbem Leuchtstoff einstellbar sind. Dabei ist zu sehen, dass mit der erfindungsgemäßen Leuchtstoffmischung der Farbort für die Lichtfarbe 2700 Kelvin problemlos einstellbar ist.

Offenbart wird eine Leuchtstoffbeschichtung für Hg-Niederdruck-Entladungslampen mit einer Leuchtstoffzusammensetzung aus zumindest einem grünen Spektralbereich emittierenden Grünleuchtstoff, insbesondere ein TB und/oder EU-dotierter Grünleuchtstoff, und einem im roten Spektralbereich emittierenden Rotleuchtstoff, insbesondere ein Eu- und/oder Mn-Rotleuchtstoff, wobei ein weiterer Leuchtstoff vorhanden ist, der dazu ausgelegt ist, UV-Hg- und Hg-Vis-Strahlung zu absorbieren.

## Patentansprüche

1. Leuchtstoffbeschichtung für Hg-Niederdruck-Entladungslampen mit einer Leuchtstoffzusammensetzung bestehend aus einem im grünen Spektralbereich emittierenden Grünleuchtstoff, insbesondere ein Tb und/oder Eu-dotierter Grünleuchtstoff, und einem im roten Spektralbereich emittierenden Rotleuchtstoff, insbesondere ein Eu- und/oder Mn-dotierter Rotleuchtstoff, wobei der Leuchtstoff Y₃AL₅O₁₂:Ce als ein weiterer Leuchtstoff vorhanden ist, der dazu ausgelegt ist, UV-Hg- und Hg-Vis-Strahlung zu absorbieren, und der ein im gelben Spektralbereich emittierender Leuchtstoff ist.

2. Leuchtstoffbeschichtung nach Anspruch 1, wobei das Emissionsmaximum des weiteren Leuchtstoffs bei einer Wellenlänge von größer als 520 nm liegt.

3. Leuchtstoffbeschichtung nach einem der vorhergehenden Ansprüche, wobei die Konzentration des zusätzlichen Leuchtstoffs derart einstellbar ist, dass ein Farbort von x = 0,463 und y = 0,420 einstellbar ist.

4. Leuchtstoffbeschichtung nach einem der vorhergehenden Ansprüche, wobei der zusätzliche Leuchtstoff in einer Konzentration von bis zu 20 Gewichtsprozent, insbesondere 10 Gewichtsprozent, bezogen auf den Grünleuchtstoffanteil in der Leuchtstoffzusammensetzung enthalten ist.

5. Leuchtstoffbeschichtung nach einem der vorhergehenden Ansprüche, wobei als Grünleuchtstoff Cermagnesiumaluminat dotiert mit Terbium (CeMgAl₁₁O₁₉:Tb oder CAT), Lathanphosphat dotiert mit Cer und Terbium (LaPO₄:Ce,Tb oder LAP) oder CerGadoliniumMagnesiumPentaborat dotiert mit Terbium ((Ce,Gd,Tb)MgB₅O₁₀ oder CBT) zur Verwendung kommt.

6. Leuchtstoffbeschichtung nach einem der vorhergehenden Ansprüche, wobei als Rotleuchtstoff Yttriumoxid dotiert mit Europium (Y₂O₃:Eu oder YOE oder L581) oder GermaniumZinkMagnesiumPentaborat (GeZnMgB₅O₁₀:Ce,Mn oder L165) zur Verwerdung kommt.

7. Hg-Niederdruck-Entladungslampe, insbesondere Kompaktleuchtstofflampe, mit einer Leuchtstoffbeschichtung nach einem der vorhergehenden Ansprüche und einem Entladungsstrom größer oder gleich 200 mA.

## Claims

1. Phosphor coating for Hg low-pressure discharge lamps with a phosphor composition consisting of a green phosphor emitting in the green spectral region, in particular a Tb- and/or Eu-doped green phosphor, and a red phosphor emitting in the red spectral region, in particular an Eu- and/or Mn-doped red phosphor, the phosphor Y₃Al₅O₁₂:Ce being provided as a further phosphor, which is designed to absorb UV Hg and Hg Vis radiation, and which is a phosphor emitting in the yellow spectral region.

2. Phosphor coating according to Claim 1, the emission maximum of the further phosphor being at a wavelength of greater than 520 nm.

3. Phosphor coating according to one of the preceding claims, the concentration of the additional phosphor being capable of being set in such a way that a color locus of x = 0.463 and y = 0.420 can be set.

4. Phosphor coating according to one of the preceding claims, the additional phosphor being contained in a concentration of up to 20 percent by weight, in particular 10 percent by weight, based on the green phosphor content in the phosphor composition.

5. Phosphor coating according to one of the preceding claims, cerium magnesium aluminate doped with terbium (CeMgAl₁₁O₁₉:Tb or CAT), lanthanum phosphate doped with cerium and terbium (LaPO₄:Ce, Tb or LAP) or cerium gadolinium magnesium pentaborate doped with terbium ((Ce, Gd, Tb)MgB₅O₁₀ or CBT) being used as the green phosphor.

6. Phosphor coating according to one of the preceding claims, yttrium oxide doped with europium (Y₂O₃:Eu or YOE or L581) or germanium zinc magnesium pentaborate (GeZnMgB₅O₁₀:Ce, Mn or L165) being used as the red phosphor.

7. Hg low-pressure discharge lamp, in particular a compact fluorescent lamp, with a phosphor coating according to one of the preceding claims, and a discharge current of greater than or equal to 200 mA.

## Revendications

1. Revêtement de substance fluorescente pour lampes à décharge à mercure basse pression, composé d'une substance fluorescente verte émettant dans le domaine spectral du vert, en particulier une substance fluorescente verte dopée au Tb et/ou à l'Eu, et d'une substance fluorescente rouge émettant dans le domaine spectral du rouge, en particulier une substance fluorescente rouge dopée à l'Eu et/ou au Mn, la substance fluorescente Y₃Al₅O₁₂:C étant présente en tant qu'autre substance fluorescente, conçue pour absorber un rayonnement UV-Hg et un rayonnement Hg-Vis et qui est une substance fluorescente émettant dans le domaine spectral du jaune.

2. Revêtement de substance fluorescente selon la revendication 1, dans lequel le maximum d'émission de l'autre substance fluorescente se situe à une longueur d'onde supérieure à 520 nm.

3. Revêtement de substance fluorescente selon l'une des revendications précédentes, dans lequel la concentration de la substance fluorescente supplémentaire peut être ajustée de façon à pouvoir régler une localisation chromatique de x = 0,463 et y = 0,420.

4. Revêtement de substance fluorescente selon l'une des revendications précédentes, dans lequel la substance fluorescente supplémentaire est contenue dans la composition de substance fluorescente en une concentration pouvant aller jusqu'à 20 % en poids, en particulier de 10 % en poids, rapportée à la proportion de la substance fluorescente verte.

5. Revêtement de substance fluorescente selon l'une des revendications précédentes, dans lequel il est utilisé comme substance fluorescente verte, l'aluminate de cérium et de magnésium dopé au Tb (CeMgAl₁₁O₁₉:Tb ou CAT), le phosphate de lanthane dopé au cérium et au terbium (LaPO₄:Ce,Tb ou LAP) ou le pentaborate de cérium, de gadolinium et de magnésium dopé au terbium ((Ce,Gd,Tb)MgB₅O₁₀ ou CBT).

6. Revêtement de substance fluorescente selon l'une des revendications précédentes, dans lequel il est utilisé comme substance fluorescente rouge, l'oxyde d'yttrium dopé à l'europium (Y₂O₃ :Eu ou YOE ou L581) ou le pentaborate de germanium, de zinc et de magnésium (GeZnMgB₅O₁₀:Ce,Mn ou L165).

7. Lampe à décharge à mercure basse pression, en particulier lampe fluorescente compacte, ayant un revêtement de substance fluorescente selon l'une des revendications précédentes et un courant de décharge supérieur ou égal à 200 mA.
